# EUROPÄISCHE PATENTSCHRIFT

(11) **EP 1 621 491 B1**
(45) Veröffentlichungstag und Bekanntmachung des Hinweises auf die Patenterteilung: **22.08.2007**
(21) Anmeldenummer: 05016452.4
(22) Anmeldetag: 28.07.2005
(51) Int. Cl.: B65G 47/88

(54) **Anhaltevorrichtung**
Stop device
Dispositif d'arrêt

(30) Priorität: 30.07.2004 DE 102004037004
(43) Veröffentlichungstag der Anmeldung: 01.02.2006
(73) Patentinhaber: Bosch Rexroth AG, 70184 Stuttgart (DE)
(72) Erfinder: Ludwig, Peter, Dipl.-Ing., 72072 Tübingen (DE); Waser, Bernd, Dipl.-Ing. (FH), 71672 Marbach (DE); Olescher, Erwin, Dipl.-Ing., 74343 Sachsenheim (DE); Koch, Jens, Dipl.-Ing., 30451 Hannover (DE); Möller, Rudolf, 30989 Gehrden (DE)
(74) Vertreter: Herzog, Markus

(56) Entgegenhaltungen:
- EP-A- 0 036 955
- DE-A1- 3 710 043
- DE-A1- 3 806 436

## Beschreibung

Die Erfindung betrifft eine Vorrichtung zum Anhalten einer sich in einer Transportrichtung längs eines Transportwegs bewegenden Transporteinheit gemäß dem Oberbegriff des Anspruchs 1.

Derartige Anhaltevorrichtungen werden beispielsweise in Fertigungs- oder Montagestraßen als Vereinzeler eingesetzt. Die Transporteinheit kann in diesem Fall von einem Werkstückträger, einem Werkstück oder dergleichen gebildet sein.

Aus der EP 0 036 955 A2 ist eine gattungsgemäße Anhaltevorrichtung bekannt, bei welcher die einzelnen Komponenten, insbesondere die als pneumatisch arbeitende Zylinder-Kolben-Einheit ausgebildete Stelleinheit, und die beiden Sensoreinheiten zur Erfassung der Anwesenheit einer Transporteinheit vor bzw. hinter der Stelleinheit zu einer Gesamteinheit miteinander verbunden sind. Ferner ist auch eine Steuereinheit vorgesehen, welche die Erfassungsergebnisse der Sensoreinheiten empfängt und aus ihnen Stellsignale zum Ansteuern der Stelleinheit ableitet. Nachteilig an der bekannten Anhaltevorrichtung ist insbesondere, dass die einzelnen Komponenten äußeren Einflüssen relativ ungeschützt ausgesetzt sind.

Es ist daher Aufgabe der Erfindung, eine Vorrichtung der eingangs genannten Art derart weiterzubilden, dass ihre einzelnen Komponenten besser vor äußeren Einflüssen, beispielsweise vor Feuchtigkeit, geschützt sind.

Diese Aufgabe wird erfindungsgemäß durch eine Anhaltevorrichtung gemäß Anspruch 1 gelöst.

Um die Eintrittsmöglichkeit von Feuchtigkeit in das Gehäuse so gering wie möglich halten zu können, ist vorgesehen, dass das Gehäuse zweiteilig ausgebildet ist, wobei dann vorzugsweise zwischen den beiden Gehäuseteilen ein Dichtungselement, beispielsweise eine Flachdichtung, vorgesehen sein kann.

Zur Erleichterung des Zusammenbaus der erfindungsgemäßen Anhaltevorrichtung kann vorgesehen sein, dass das Gehäuse wenigstens ein Führungselement für eine der Komponenten der Anhaltevorrichtung umfasst. Dabei kann das Führungselement beispielsweise eine an der Innenwandung des Gehäuses angeordnete oder ausgebildete Führungsleiste umfassen.

Zur Vereinfachung der Montage wird ferner vorgeschlagen, dass wenigstens ein Teil der, vorzugsweise alle, Komponenten der Anhaltevorrichtung, einschließich der Gehäuseteile, im fertig montiertem Zustand miteinander verrastet oder verschnappt oder verpresst sind. Hierdurch kann insbesondere das zeitaufwendige Festziehen von Montageschrauben entfallen.

Eine besonders kompakte Anordnung der erfindungsgemäßen Anhaltevorrichtung kann beispielsweise dadurch erhalten werden, dass das Gehäuse im fertig montierten Zustand einen Bauraum von höchstens 330 cm³ einnimmt. Beispielsweise kann die Länge des Gehäuses (Abmessung in Transportrichtung) höchstens 96 mm, die Breite des Gehäuses (Abmessung in Querrichtung) höchstens 42,5 mm und die Höhe des Gehäuses (Abmessung in Hochrichtung) höchstens 80 mm betragen. Diese kompakte Ausbildung stellt selbstverständlich erhöhte Anforderungen an die Anordnung der einzelnen Komponenten in dem Gehäuse.

Um die Funktionsfähigkeit der Stelleinheit überwachen zu können, wird in Weiterbildung der Erfindung vorgeschlagen, dass die Anhaltevorrichtung ferner eine Sensoreinheit zur Erfassung der Stellung des Stellelements der Stelleinheit umfasst. Es hat sich nämlich in der Praxis herausgestellt, dass es unabhängig von der Antriebsart der Stelleinheit vorkommen kann, dass das Stellelement mit zunehmender Betriebsdauer langsamer verfährt als im Neuzustand. Mit Hilfe der erfindungsgemäßen Sensoreinheit zur Erfassung der Stellung des Stellelements kann somit zum einen überwacht werden, wie schnell das Stellelement den zu seiner Funktion erforderlichen Stellungswechsel tatsächlich vornimmt, und zum anderen überwacht werden, ob es die gewünschte Endstellung auch tatsächlich erreicht. Dies ermöglicht beispielsweise die Realisierung einer Vorausfallsanzeige.

Bevorzugt kann auch die Stellelement-Sensoreinheit in dem Gehäuse integriert sein. Hierdurch wird allerdings die Erfüllung des Wunsches nach einer möglichst kompakten Anordnung der Anhaltevorrichtung noch weiter erschwert. Aus diesem Grund war bei den aus dem Stand der Technik bekannten Anhaltevorrichtungen bzw. Vereinzelern keine derartige Stellelement-Sensoreinheit vorgesehen.

In bestimmten Anwendungsfällen kann es erwünscht sein, dass das Gehäuse ferner eine Anschlussstelle zum Anschließen einer zusätzlichen, außerhalb des Gehäuses anordenbaren Sensoreinheit zur Erfassung der Anwesenheit einer Transporteinheit umfasst.

Die wenigstens eine Transporteinheit-Sensoreinheit oder/und die Stellelement-Sensoreinheit kann beispielsweise einen induktiven Sensor umfassen. Alternativ kann jedoch auch ein Endschalter oder/und ein Näherungsschalter oder/und eine Lichtschranke oder/und ein Wegemesssystem oder/und ein Positionsermittlungssystem eingesetzt werden.

In Weiterbildung der Erfindung wird vorgeschlagen, dass in dem Gehäuse ferner eine Anzeigevorrichtung integriert ist. Diese Anzeigevorrichtung kann beispielsweise als Klartextanzeige oder/und Nummernanzeige oder/und Leuchtdioden-Anordnung oder/und Display ausgebildet sein, und Auskunft über den Betriebszustand der Anhaltevorrichtung oder/und ihrer integrierten oder/und extern an sie angeschlossenen Komponenten geben.

Als Stelleinheit kann beispielsweise eine fluidisch, vorzugsweise pneumatisch, betätigbare Zylinder-Kolben-Einheit zum Einsatz kommen. Das Stellelement kann in diesem Fall eine an dem Kolben befestigte Kolbenstange oder ein mit dieser verbundenes Teil sein. Alternativ kann die Stelleinheit jedoch auch eine elektromagnetisch, beispielsweise mittels eines Hubmagnets, betätigbare oder eine elektromotorisch betätigbare, beispielsweise einen Spindeltrieb aufweisende, Stelleinheit sein.

Die Stelleinheit kann dabei beispielsweise ein Schaltelement zum Ansteuern der Verstellung des Stellelements umfassen, im fluidisch betätigbaren Fall beispielsweise ein 3/2-Wegeventil bzw. im elektromagnetisch oder elektromotorisch betätigbaren Fall ein Schaltrelais.

Unabhängig von dem jeweiligen Antriebskonzept der Stelleinheit wird in Weiterbildung der Erfindung vorgeschlagen, dass das Gehäuse eine Anschlussstelle zum Zuführen oder/und Abführen eines Mediums umfasst, welches die zum Verstellen des Stellelements erforderliche Energie (Hilfsenergie) bereitstellt. Dabei kann das Hilfsenergie-Medium beispielsweise elektrischer Strom, Druckluft, Hydraulikflüssigkeit oder dergleichen sein. Im Hinblick auf eine möglichst kompakte Anordnung sämtlicher Komponenten der erfindungsgemäßen Anhaltevorrichtung kann dieser Anschluss für das Hilfsenergie-Medium vorzugsweise dem Schaltelement benachbart angeordnet sein.

Um auch bei Ausfall der Zufuhr des Hilfsenergie-Mediums sicherstellen zu können, dass sich das Stellelement selbsttätig in eine vordefinierte Sicherheitsstellung bewegt, wird vorgeschlagen, dass das Stellelement, beispielsweise mittels einer Feder, in die vorgerückte Stellung vorgespannt ist. Die Feder kann dabei beispielsweise eine Schraubenfeder, vorzugsweise eine Schraubendruckfeder, sein.

In Weiterbildung der Erfindung wird vorgeschlagen, dass die Steuereinheit mit den beiden Transporteinheit-Sensoreinheiten, mit der Stelleinheit, insbesondere deren Schaltelement, sowie gewünschtenfalls der zusätzlichen Transporteinheit-Sensoreinheit oder/und der Stellelement-Sensoreinheit oder/und der Anzeigevorrichtung in Signal- bzw. Datenaustauschverbindung steht. Über die hierzu vorgesehenen Signal- bzw. Datenleitungen kann die Steuereinheit die Erfassungssignale der Sensoreinheiten empfangen sowie die Stelleinheit ansteuern.

Erfindungsgemäß kann das Gehäuse ferner eine Anschlussstelle für die externe Signalaustauschverbindung zu der übergeordneten Steueranordnung umfassen.

Darüber hinaus ist die Steuereinheit mit eigene Intelligenz ausgebildet. Im letztgenannten Fall meldet die Steuereinheit die Erfassungssignale an eine entfernt angeordnete übergeordnete Steueranordnung weiter und empfängt von dieser ein entsprechendes Ansteuersignal für die Stelleinheit, das sie dann an die Stelleinheit einfach weiterleitet.

Im erstgenannten Fall ist die Steuereinheit hingegen in der Lage, die Stelleinheit in Abhängigkeit der Erfassungssignale der Sensoreinheiten unmittelbar bei Bedarf anzusteuern.

Beispielsweise kann die Steuereinheit der Stelleinheit den Befehl zum Überführen des Stellelements in dessen vorgerückte Stellung geben, wenn die hinter der Stelleinheit angeordnete Sensoreinheit die Anwesenheit einer Transporteinheit erfasst hat. Die Erteilung dieses Befehls wird auch an die entfernt angeordnete übergeordnete Steueranordnung weitergeleitet, damit diese über den aktuellen Betriebszustand der Anhaltevorrichtung informiert ist. Ist darüber hinaus auch eine zusätzliche Transporteinheit-Sensoreinheit vorhanden, so kann die Steuereinheit zudem dann, wenn die zusätzliche Sensoreinheit die Anwesenheit einer Transporteinheit erfasst hat, der Stelleinheit den Befehl zum Überführen des Stellelements in dessen zurückgezogene Stellung geben. Auch die Erteilung dieses Befehls wird an die entfernt angeordnete übergeordnete Steueranordnung weitergeleitet, damit diese über den aktuellen Betriebszustand der Anhaltevorrichtung informiert ist.

Der Vorteil des erstgenannten Falls ist darin zu sehen, dass sich die über die externe Signal- bzw. Datenaustauschverbindung zu übermittelnde Signal- bzw. Datenmenge erheblich reduziert. Außerdem entfällt die durch die Kommunikation mit der übergeordneten Steueranordnung, d.h. den Vor- und Rücktransport der Daten, verursachte Zeitverzögerung. Die lokale Intelligenz kann beispielsweise durch den Einsatz von µC-Rechnereinheiten oder dergleichen realisiert sein.

Um trotz der komplexen Aufgaben, die die Steuereinheit zu erfüllen hat, eine kompakte Anordnung sämtlicher Komponenten der erfindungsgemäßen Anhaltevorrichtung ermöglichen zu können, wird vorgeschlagen, dass die Steuereinheit zwei Steuermodule umfasst, von denen eines in Transportrichtung vor und das andere in Transportrichtung hinter der Stelleinheit angeordnet ist. Dabei ist es durchaus möglich, dass eines der Steuermodule bauraumgrößer ausgebildet ist als das jeweils andere Steuermodul. Die Aufteilung der einzelnen Funktionen auf die beiden Steuermodule, die vorzugsweise miteinander ebenfalls in Signal- bzw. Datenaustauschverbindung stehen, kann dabei derart gewählt sein, dass die Gesamtlänge der erforderlichen Signal- bzw. Datenleitungen minimiert ist.

Beispielsweise kann auf der Seite der Stelleinheit, auf der das bauraumgrößere Steuermodul angeordnet ist, die Stellelement-Sensoreinheit angeordnet sein. Ferner kann auf der Seite der Stelleinheit, auf der das bauraumkleinere Steuermodul angeordnet ist, das Schaltelement der Stelleinheit angeordnet sein. Ferner kann jedem der beiden Steuermodule jeweils eine der Transporteinheit-Sensoreinheiten zugeordnet sein. Dem bauraumgrößeren Steuermodul kann ferner die Anzeigeeinheit zugeordnet sein, und es kann mit sämtlichen elektrischen Anschlüssen des Gehäuses verbunden sein.

Um die beiden Steuermodule möglichst einfach ausbilden und dennoch raumsparend anordnen zu können, wird vorgeschlagen, dass wenigstens eines der beiden Steuermodule als Faltplatine ausgebildet ist. Dabei kann auf der Faltplatine wenigstens eine elektrisch leitfähige Abschirmfläche vorgesehen sein, welche im gefalteten Zustand der Faltplatine vorzugsweise wenigstens eine elektrische Teilschaltung des Steuermoduls umschließt und somit vor äußeren elektromagnetischen Wechselfeldern abschirmt.

Darüber hinaus hat es sich als vorteilhaft erwiesen, wenn die Faltplatine in Gießharz eingegossen ist. In diesem Fall kann ihre Dichtigkeit erhöht und somit ihre Anfälligkeit gegenüber Feuchtigkeit verringert werden, und dies insbesondere auch an den Anschlüssen der Signal- bzw. Datenleitungen mit den anderen Komponenten der Anhaltevorrichtung, beispielsweise dem anderen Steuermodul. Zur Verbesserung des Schutzes vor äußeren Einflüssen kann ferner vorgesehen sein, dass auch die wenigstens einem der Steuermodule zugeordnete Transporteinheit-Sensoreinheit oder/und Stellelement-Sonsoreinheit mit diesem Steuermodul vergossen ist.

Um die erfindungsgemäße Anhaltevorrichtung und insbesondere deren Steuermodule möglichst effektiv auch vor mechanischen Einflüssen, wie Vibrationen, Stößen und dergleichen schützen zu können, kann wenigstens eines der Steuermodule mit einem zugeordneten Haltebolzen, der zur Befestigung der Anhaltevorrichtung an einer übergeordneten Baugruppe dient, oder einem diesem Haltebolzen zugeordneten Teil derart zusammenwirken, dass es von einer an diesem Haltebolzen oder an dem diesem zugeordneten Teil ausgebildeten Schulter in Anlage gegen eine Gehäusewandung gedrängt wird.

Die Signal- bzw. Datenaustauschverbindungen werden vorzugsweise durch eine Signal- bzw. Datenleitung des Feldbus-Typs, vorzugsweise des ASI-Bus-Typs (Aktuator-Sensor Interface), realisiert. Diese Signal- bzw. Datenleitung kann beispielsweise ein zweiadriges Kabel umfassen, das gleichzeitig zur Stromversorgung und zur Signalübertragung verwendet wird. Zum Auslesen der Daten aus dieser Signalleitung sind dabei sogenannte Symmetrierspulen erforderlich, welche induktiv auf elektromagnetische Wechselfelder reagieren, die von der Signal- bzw. Datenleitung ausgehen.

Da insbesondere bei Einsatz induktiver Sensoren in den Transporteinheit-Sensoreinheiten oder/und der Stellelement-Sensoreinheit auch von diesen Sensoreinheiten elektromagnetische Wechselfelder erzeugt werden, besteht bei der erfindungsgemäßen Anhaltevorrichtung die Gefahr einer Störung der Funktion der Symmetrierspulen. Daher wird in Weiterbildung der Erfindung vorgeschlagen, dass dann, wenn einem Steuermodul, beispielsweise dem bauraumgrößeren Steuermodul, zwei Sensoreinheiten zugeordnet sind, beispielsweise eine der Transporteinheit-Sensoreinheiten und die Stellelement-Sensoreinheit, die für den Signal- bzw. Datenaustausch erforderliche, wenigstens eine Symmetrierspule dieses Steuermoduls etwa in der Mitte zwischen den beiden Sensoreinheiten angeordnet ist. Dort heben sich deren Wechselfelder so weit auf, dass keine unzulässigen Störspannungen in der Symmetrierspule induziert werden können.

Nachzutragen ist noch, dass es erfindungsgemäß bevorzugt ist, wenn wenigstens ein Teil der, vorzugsweise alle, elektrischen Kontakte, insbesondere der Anschlüsse der Signal- bzw. Datenaustauschverbindungen, als Steckkontakte ausgebildet sind. Hierdurch vereinfacht sich die Montage der erfindungsgemäßen Anhaltevorrichtung beträchtlich, da hierdurch der für die Herstellung von Lötkontakten erforderliche Arbeitsaufwand entfällt.

Die Erfindung wird im Folgenden an einem Ausführungsbeispiel anhand der beigefügten Zeichnungen näher erläutert werden. Es stellt dar:
- Fig. 1: eine perspektivische Explosionsdarstellung einer erfindungsgemäßen Anhaltevorrichtung;
- Fig. 2: eine Draufsicht auf die Anhaltevorrichtung gemäß Fig. 1;
- Fig. 3: eine Druntersicht unter die Anhaltevorrichtung gemäß Fig. 1;
- Fig. 4: eine längs der Linie IV-IV in Fig. 2 genommene Schnittansicht der Anhaltevorrichtung; und
- Fig. 5: eine schematische Blockdarstellung der erfindungsgemäßen Anhaltevorrichtung in einer Sicht ähnlich Fig. 4.

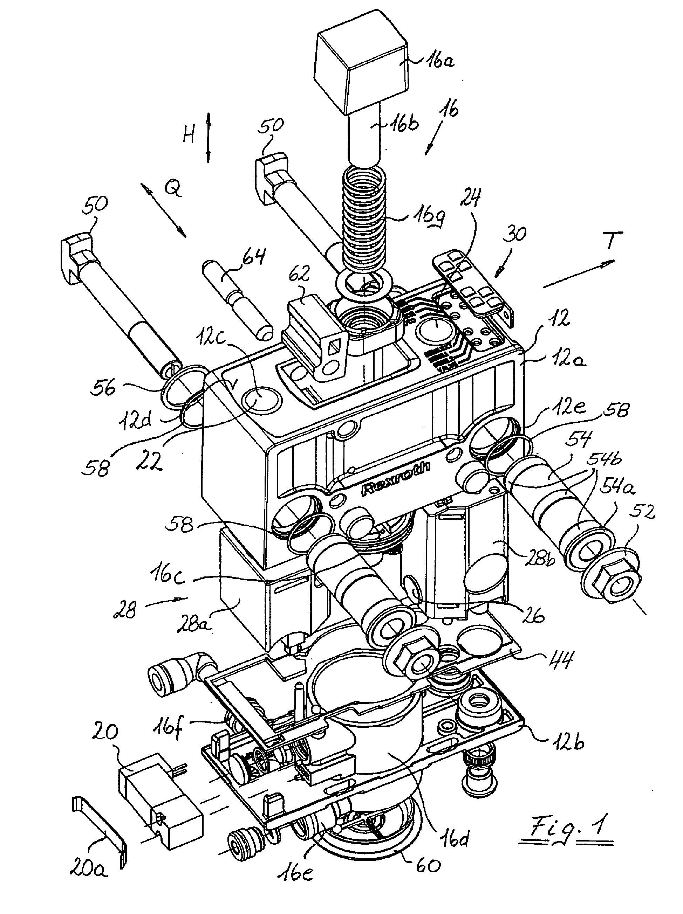

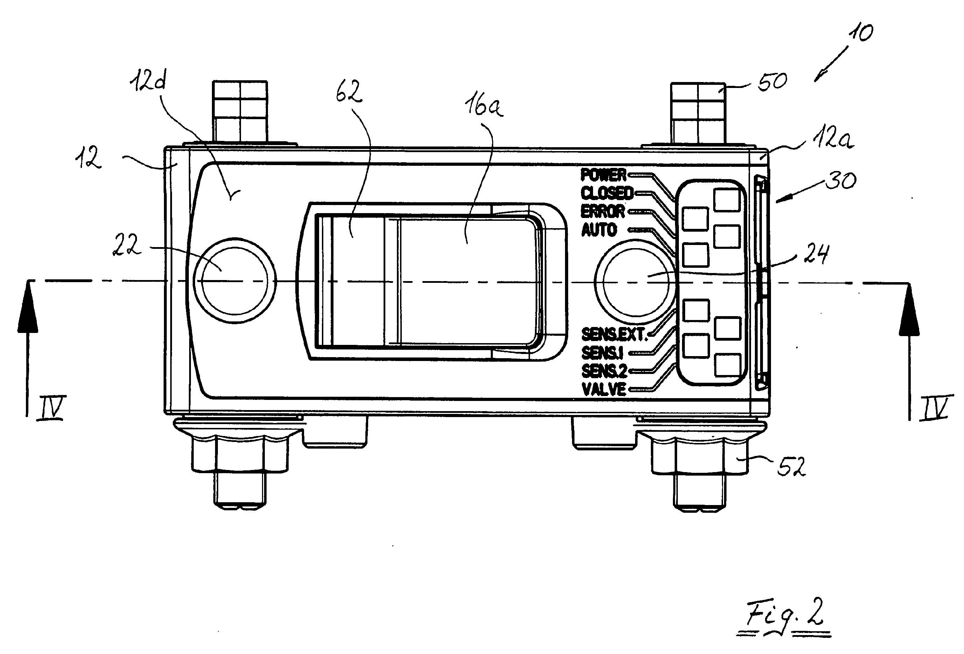

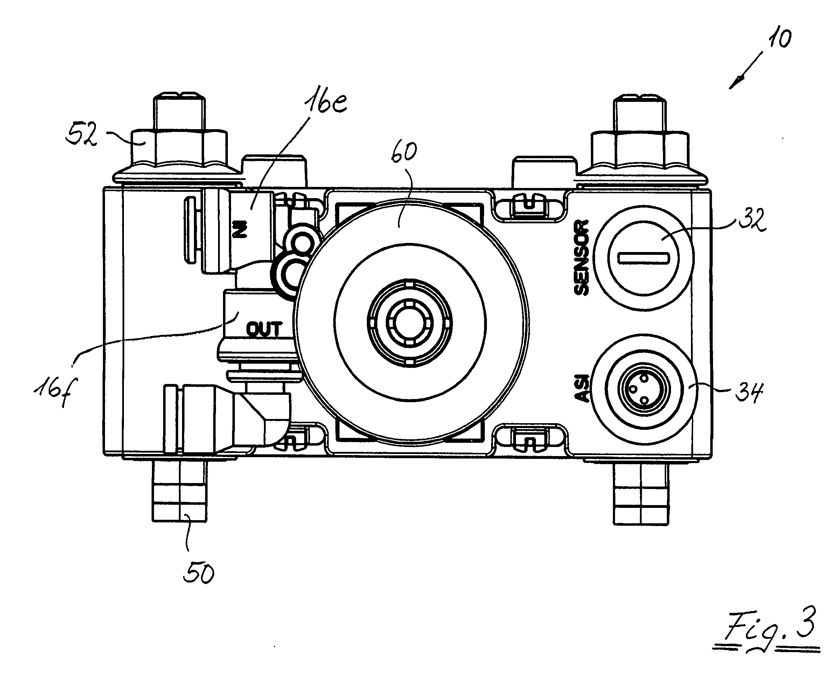

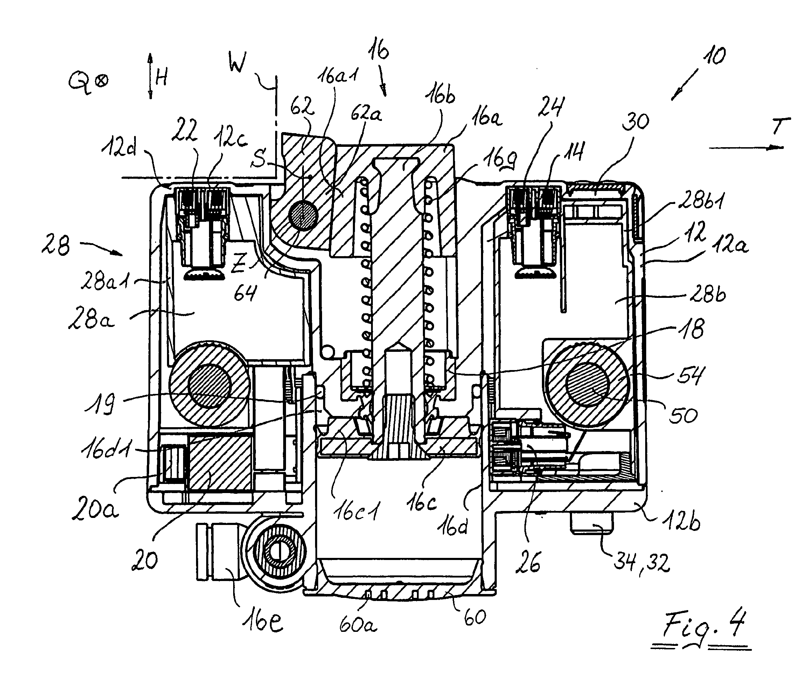

In den Fig. 1 bis 5 ist eine erfindungsgemäße Anhaltevorrichtung allgemein mit 10 bezeichnet. Diese Anhaltevorrichtung kann beispielsweise in einer Fertigungsstraße oder Montagestraße als Vereinzeler für Werkstücke W (siehe Fig. 4), Werkstückträger oder dergleichen eingesetzt werden. Derartige Vereinzeler sind aus dem Stand der Technik an sich bekannt.

Die erfindungsgemäße Anhaltevorrichtung 10 umfasst ein, vorzugsweise aus Kunststoff gefertigtes, Gehäuse 12, das ein oberes Gehäuseteil 12a und ein unteres Gehäuseteil 12b umfasst. Zur Abdichtung des Gehäuses 12 gegenüber äußeren Einflüssen, insbesondere dem Eindringen von Feuchtigkeit in das Gehäuse 12 ist zwischen dem oberen Gehäuseteil 12a und dem unteren Gehäuseteil 12b eine Flachdichtung 44 angeordnet ist, die in dem miteinander verbundenen, beispielsweise verrasteten, Zustand der beiden Gehäuseteile 12a und 12b zwischen diesen zusammengedrückt ist und somit das Eindringen von Feuchtigkeit in den Innenraum 14 des Gehäuses 12 verhindert.

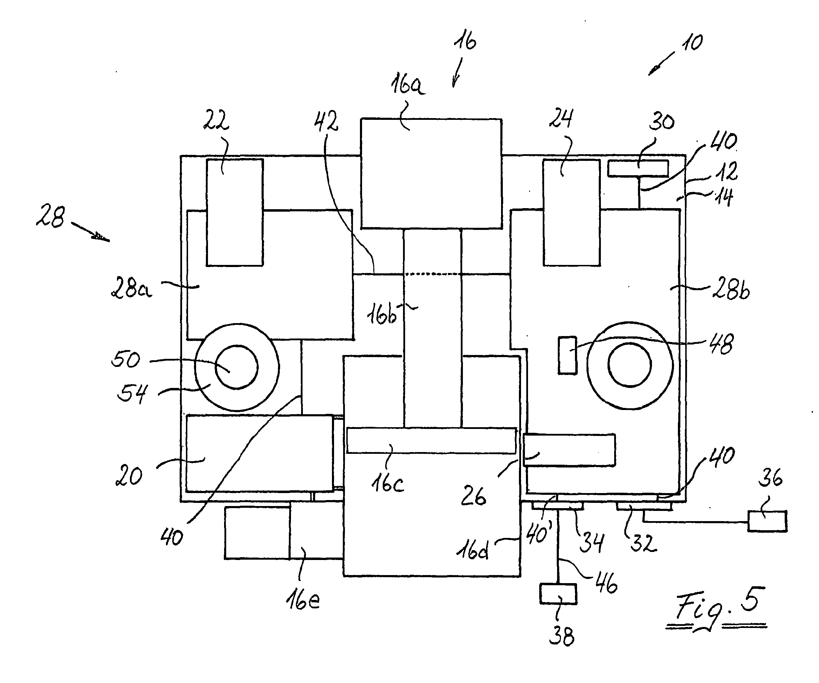

Erfindungsgemäß sind in dem von dem Gehäuse 12 umschlossenen Aufnahmeraum 14 (siehe Fig. 4 und 5) sämtliche funktionswesentlichen Komponenten der Anhaltevorrichtung 10 untergebracht:

Eine in dem dargestellten Ausführungsbeispiel als pneumatisch arbeitende Zylinder-Kolben-Einheit ausgebildete Stelleinheit 16 umfasst ein Stellelement 16a, das an einer Kolbenstange 16b befestigt ist. Die Kolbenstange 16 ist, wie insbesondere in Fig. 4 dargestellt ist, ihrerseits an einem Kolben 16c befestigt. Der Kolben 16c wiederum kann sich in einem Zylinder 16d gleitend auf und ab bewegen, der mit dem unteren Gehäuseteil 12b einstückig ausgebildet ist. Ferner ist in dem unteren Gehäuseteil 12b ein Anschlussstutzen 16e zur Zufuhr von Druckluft und ein Ablassstutzen 16f zur Entlüftung des Zylinders 16d vorgesehen. Das Stellelement 16a und somit auch der Kolben 16c sind mittels einer Schraubendruckfeder 16g in die in Fig. 4 dargestellte vorgerückte, d.h. aus dem oberen Gehäuseteil 12a hervorstehende Stellung, vorgespannt. Die Feder 16g stützt sich dabei einenends an dem Stellelement 16a und andernends an einem Dichtungseinsatz 18 ab (siehe Fig. 4), der den Durchtritt der Kolbenstange 16b durch das obere Gehäuseteil 12a in den Druckraum 16d1 des Zylinders 16d gegenüber einem unerwünschten Druckverlust abdichtet. Ein Druckverlust zum Innenraum 14 des Gehäuses 12 hin wird durch eine O-Ringdichtung 19 verhindert. Diese schützt den Innenraum 14 des Gehäuses 12 zudem vor dem unerwünschten Eintritt von Feuchtigkeit.

Ferner ist in dem Innenraum 14 ein 3/2-Wegeventil 20 mit einer Ventilfeder 20a als Schalteinheit zum wahlweisen Zuführen von Druckluft zu der Stelleinheit 16 oder Entlüften der Stelleinheit 16 vorgesehen.

In Transportrichtung T vor der Stelleinheit 16 ist eine Sensoreinheit 22 angeordnet, die zur Erfassung der Anwesenheit eines Werkstücks W, eines Werkstückträgers oder dergleichen im Bereich der Anhaltevorrichtung 10 dient. Die Sensoreinheit 22 ist beispielsweise als induktiver Sensor ausgebildet, sodass sie vollständig innerhalb des Gehäuses 12 angeordnet sein kann. Genauer gesagt kann die Sensoreinheit 22 einem Wandungsabschnitt 12c der oberen Fläche 12d des Gehäuses 12 benachbart angeordnet sein, der eine geringere Wandstärke aufweist als die restliche Wandung des Gehäuses 12, und durch diesen vor äußeren Einflüssen geschützt sein (siehe Fig. 4).

Eine analoge Sensoreinheit 24 befindet sich ferner in Transportrichtung T hinter der Stelleinheit 16. Aufbau und Funktion der Sensoreinheit 24 entsprechen jenen der Sensoreinheit 22.

Auf der der Schalteinheit 20 gegenüberliegenden Seite der Stelleinheit 16 ist eine weitere Sensoreinheit 26 angeordnet. Diese Sensoreinheit dient zur Erfassung der Stellung des Kolbens 16c im Zylinder 16d. Auch die Sensoreinheit 26 ist im vorliegenden Fall als induktiver Sensor ausgebildet. Zur Erzielung zuverlässiger Erfassungsergebnisse ist daher auch die Wandung des Zylinders 16d der Sensoreinheit 26 benachbart mit geringer Wandstärke ausgebildet. Mit Hilfe der Sensoreinheit 26 kann die Funktionsfähigkeit der Stelleinheit 16 und insbesondere die Verstellgeschwindigkeit des Kolbens 16c und somit auch des Stellelements 16a überwacht werden.

Die Erfassungsergebnisse der Sensoreinheiten 22, 24 und 26 werden an eine Steuereinheit 28 übermittelt. Darüber hinaus übermittelt die Steuereinheit 28 für den Betrieb der Stelleinheit 16 erforderliche Stellsignale an die Schalteinheit 20.

Die Steuereinheit 28 umfasst zwei Steuermodule 28a und 28b, wobei das Steuermodul 28a in Transportrichtung T vor der Stelleinheit 16 und das Steuermodul 28b in Transportrichtung T hinter der Stelleinheit 16 angeordnet ist. Die Aufteilung der Steuereinheit 28 in zwei voneinander getrennte Steuermodule 28a und 28b sowie die nachfolgend noch näher zu erläuternde Aufteilung der Steuerungsfunktionen auf diese beiden Steuermodule 28a und 28b ist mitentscheidend für die Realisierbarkeit des erfindungsgemäß vorgesehenen kompakten Aufbaus der Anhaltevorrichtung 10.

Ferner ist die Steuereinheit mit einer Anzeigeeinheit 30 verbunden, die in dem in den Figuren dargestellten Ausführungsbeispiel als Leuchtdioden-anordnung ausgebildet ist und über den Betriebszustand der Anhaltevorrichtung 10 sowie ihrer verschiedenen Komponenten Aufschluss gibt.

Schließlich ist die Steuereinheit 28 noch mit zwei externen Anschlüssen versehen, nämlich einem Anschluss 32 zum Anschließen einer externen Sensoreinheit 36 zur Erfassung der Anwesenheit eines Werkstücks W bzw. eines Werkstückträgers an einer von der Anhaltevorrichtung 10 entfernten Position, und einen Anschluss 34, der zum Anschluss einer externen Datenleitung 46 zur Übermittlung von Signalen an eine entfernt angeordnete übergeordnete Steuervorrichtung 38 und zum Empfang von Signalen von dieser übergeordneten Steuervorrichtung 38 dient.

Wie insbesondere in Fig. 5 dargestellt ist, stehen die Sensoreinheiten 22, 24 und 26, die Schalteinheit 20, die Anzeigeeinheit 30 und die Anschlussstelle 32 mit den Steuermodulen 28a und 28b über Daten- bzw. Signalleitungen 40 in Daten- bzw. Signalaustauschverbindung. Und auch die Steuermodule 28a und 28b der Steuereinheit 28 stehen über eine Daten- bzw. Signalleitung 42 in Daten- bzw. Signalaustauschverbindung. In Fig. 5 sind nicht alle der Leitungen 40 dargestellt, da beispielsweise die Sensoreinheiten 22, 24 und 26 jeweils in ein zugeordnetes der Steuermodule 28a und 28b fest integriert sind. Auf die Daten- bzw. Signalaustauschverbindung zu der externen Steuervorrichtung 38 wird weiter unten noch näher eingegangen werden.

In dem dargestellten Ausführungsbeispiel nehmen die beiden Steuermodule 28a und 28b nicht gleich viel Bauraum ein. Vielmehr ist das Steuermodul 28b bauraumgrößer ausgebildet als das Steuermodul 28a, da es auch eine größere Anzahl von Steueraufgaben zu erfüllen hat als das Steuermodul 28a. Und zwar ist das Steuermodul 28a lediglich für die Sensoreinheit 22 und die Schalteinheit 20 verantwortlich, während dem bauraumgrößeren Steuermodul 28b die Sensoreinheiten 24 und 26, die Anzeigeeinheit 30 und die beiden externen Anschlüsse 32 und 34 zugeordnet sind.

Die Steuermodule 28a und 28b sind vorzugsweise als auf Faltplatinen angeordnete Schaltkreise ausgebildet. Dies hat den Vorteil, dass sie bei einfacher Herstellung im entfalteten Zustand im fertig bestückten und verdrahteten Zustand auf ein geringes Bauvolumen zusammengefaltet werden können. In diesem zusammengefalteten Zustand können die Steuermodule dann zudem in Gießharz eingegossen und in vorgefertigten Kunststoffgehäusen 28a1 und 28b1 angeordnet werden. Dies erhöht ihren Schutz vor äußeren Einflüssen, insbesondere Feuchtigkeit nochmals beträchtlich.

Die Steuereinheit 28 der erfindungsgemäßen Anhaltevorrichtung 10 ist mit der externen Steuervorrichtung 38 vorzugsweise über einen Feldbus, beispielsweise einen sogenannten ASI-Bus 46 (Aktuator-Sensor Interface) verbunden. Entsprechend ist auch die Signal- bzw. Datenleitung 40', welche die Anschlussstelle 34 mit dem Steuermodul 28b verbindet, als ein solcher Feldbus, vorzugsweise ASI-Bus, ausgebildet.

Bus-Systeme des genannten Typs haben den Vorteil, dass sie kostengünstig erhältlich und einfach aufgebaut sind. Sie bestehen im Wesentlichen aus einem zweiadrigen Kabel, über das den angeschlossenen Elektronikeinheiten sowohl die zu ihrem Betrieb erforderlichen Energie in Form von Strom zugeführt wird, als auch die für sie bestimmten Signale bzw. Daten.

Das Auslesen der Daten aus dem zweiadrigen Kabel erfolgt mit Hilfe von sogenannten Symmetrierspulen, die induktiv auf elektromagnetische Wechselfelder des in dem zweiadrigen Kabel fließenden Stroms reagieren.

Da die erfindungsgemäße Anhaltevorrichtung 10 ferner über drei vorzugsweise induktiv arbeitende Sensoreinheiten 22, 24 und 26 verfügt, die ihrerseits elektromagnetische Wechselfelder aussenden, und dies üblicherweise etwa im gleichen Frequenzbereich zwischen 110 und 130 kHz, besteht das Problem, dass die Sensoreinheiten 22, 24 und 26 die Funktion der Symmetrierspulen 48 der Steuereinheit 28 stören können. Diese Problematik wurde erfindungsgemäß dadurch zumindest abgeschwächt, wenn nicht gar vollständig umgangen, dass die Symmetrierspulen 48 des Steuermoduls 28b, d.h. der Steuereinheit 28, im Wesentlichen in der Mitte zwischen den beiden dem Steuermodul 28b zugeordneten Sensoreinheiten 24 und 26 angeordnet ist. In diesem Bereich heben sich die elektromagnetischen Wechselfelder der beiden Sensoreinheiten 24 und 26 so weit auf, dass in den Symmetrierspulen 48 keine unzulässigen Störspannungen mehr induziert werden können. Die dem Steuermodul 28a zugeordnete Sensoreinheit 22 ist bereits so weit von den Symmetrierspulen 48 entfernt, dass das von ihr ausgehende Störpotential verglichen mit jenem der beiden Sensoreinheiten 24 und 26 im Wesentlichen vernachlässigt werden kann.

Die vorstehend erläuterte Anordnung der Symmetrierspulen 48 bei Einsatz eines Feldbus-Systems, vorzugsweise ASI-Bus-Systems, ist unabhängig von den den Schutz des Gehäuses 12 vor Eindringen von Feuchtigkeit betreffenden Merkmalen und unabhängig von den die kompakte Anordnung sämtlicher Komponenten in dem Gehäuse 12 ermöglichenden Merkmalen von besonderer Bedeutung für die Funktionsfähigkeit der erfindungsgemäßen Anhaltevorrichtung 10.

Nachzutragen ist noch, dass die gesamte Anhaltevorrichtung 10 lediglich mittels zweier Befestigungsbolzen 50 an einer übergeordneten Montageeinheit, beispielsweise der Transportbahn des Transportsystems zum Transport der Werkstücke W, befestigt werden kann. Hierzu sind die Befestigungsbolzen 50 vorzugsweise als Hammerkopfschrauben ausgebildet, welche in T-Nuten der übergeordneten Baueinheit eingesetzt werden können. Die zwischen den Befestigungsschrauben 50 und den zugeordneten Muttern 52 wirkenden Klemmkräfte werden vorzugsweise nicht über das Kunststoffgehäuse 12 übertragen, sondern über Metallhülsen 54, welche in Öffnungen 12e des oberen Gehäuseteils 12a des Gehäuses 12 eingeführt sind und das Gehäuse 12 durchsetzen. Die Relativanordnung des Gehäuses 12 bezüglich der Befestigungseinheit 50/52/54 erfolgt über einen Ringkragen 54a der Metallhülse 54 und eine Beilagscheibe 56, welche auf der anderen Seite des Gehäuses 12 angeordnet ist. Ferner sind Dichtungsringe 58 vorgesehen, welche das unerwünschte Eindringen von Feuchtigkeit durch die Öffnungen 12e verhindern.

Darüber hinaus ist darauf hinzuweisen, dass die Metallhülsen 54 über eine Mehrzahl von Zentrierbunde 54b verfügen, über welche sie mit den Steuermodulen 28a und 28b und dem Gehäuse 12 in Eingriff treten, um die Steuermodule 28a und 28b gegen die Innenseite des Gehäuses 12 zu pressen, und zwar zur oberen Gehäusewandung 12d hin. Hierdurch ist die ordnungsgemäße Positionierung der Sensoreinheiten 22 und 24 und auch der Sensoreinheit 26 sichergestellt.

Abschließend sei noch erwähnt, dass das untere Ende des Zylinders 16d mittels eines Deckels 60 verschlossen ist, der Belüftungsöffnungen 60a aufweist. Eine Abdichtung gegen den unerwünschten Eintritt von Feuchtigkeit braucht an dieser Stelle nicht zu erfolgen, da der Innenraum 14 des Gehäuses 12 hier bereits durch das Dichtungselement 16c1 des Kolbens 16c der Stelleinheit 16 abgedichtet ist.

Mit Bezug auf Fig. 4 ist noch nachzutragen, dass das Stellelement 16a zum Anhalten der Werkstücke W nicht selbst unmittelbar auf diese einwirkt. Vielmehr ist in Transportrichtung T vor dem Stellelement 16a ein Anhalteelement 62 vorgesehen, welches um eine in Querrichtung Q (verläuft zur Transportrichtung T orthogonal) verlaufende Achse 64 verschwenkbar ist. Dabei schließen die Anlageflächen 16a1 des Stellelements 16a und 62a des Anhalteelements 62 mit der Hochrichtung H (verläuft sowohl zur Transportrichtung T als auch zur Querrichtung Q orthogonal) einen Winkel von zwischen etwa 5 und etwa 15°, vorzugsweise etwa 10° ein. Darüber hinaus ist das Zentrum Z der Schwenkachse 64 in dem in Fig. 4 dargestellten ausgerückten Zustand des Stellelements 16a bzw. Anhaltezustand des Anhalteelements 62 in Höhenrichtung H zum Schwerpunkt S des Anhalteelements 62 nicht fluchtend, sondern in Transportrichtung T hinter diesem angeordnet. Infolgedessen verschwenkt das Anhalteelement 62 dann, wenn das Stellelement 16a in seine zurückgezogene Stellung übergeführt wird, selbsttätig in Fig. 4 im Uhrzeigersinn und gibt somit den Weg für das Werkstück W frei.

## Patentansprüche

1. Vorrichtung (10) zum Anhalten einer sich in einer Transportrichtung (T) längs eines Transportwegs bewegenden Transporteinheit (W), umfassend die Komponenten:
- eine Stelleinheit (16) mit einer Antriebseinheit (16c/16d) und einem durch die Antriebseinheit (16c/16d) zwischen einer vorgerückten Stellung und einer zurückgezogenen Stellung verstellbaren Stellelement (16a),
wobei das Stellelement (16a) in seiner vorgerückten Stellung mit der Transporteinheit (W) mittelbar oder unmittelbar in Anhalteeingriff bringbar ist, in seiner zurückgezogenen Stellung die Transporteinheit (W) hingegen passieren lässt,
- eine bezogen auf die Transportrichtung (T) vor der Stelleinheit (16) angeordnete Sensoreinheit (22) zur Erfassung der Anwesenheit einer Transporteinheit (W) vor der Stelleinheit (16),
- eine bezogen auf die Transportrichtung (T) hinter der Stelleinheit (16) angeordnete Sensoreinheit (24) zur Erfassung der Anwesenheit einer Transporteinheit (W) hinter der Stelleinheit (16),
- eine mit eigener Intelligenz ausgebildete Steuereinheit (28) zum Empfangen der Erfassungsergebnisse der Transporteinheit-Sensoreinheiten (22, 24) und zum Steuern der Stelleinheit (16),
wobei die beiden Transporteinheit-Sensoreinheiten (22, 24) und die Antriebseinheit (16c/16d) der Stelleinheit (16) in einem gemeinsamen Gehäuse (12) integriert sind,
**dadurch gekennzeichnet, dass** in dem Gehäuse (12) auch die Steuereinheit (28) integriert ist.

2. Anhaltevorrichtung nach Anspruch 1,
**dadurch gekennzeichnet, dass** das Gehäuse (12) zweiteilig (12a, 12b) ausgebildet ist.

3. Anhaltevorrichtung nach Anspruch 2,
**dadurch gekennzeichnet, dass** zwischen den beiden Gehäuseteilen (12a, 12b) ein Dichtungselement (44), vorzugsweise eine Flachdichtung, vorgesehen ist.

4. Anhaltevorrichtung nach Anspruch 2 oder 3,
**dadurch gekennzeichnet, dass** die beiden, vorzugsweise aus Kunststoff gefertigten, Gehäuseteile (12a, 12b) miteinander verrastbar bzw. verschnappbar sind.

5. Anhaltevorrichtung nach einem der Ansprüche 1 bis 4,
**dadurch gekennzeichnet, dass** das Gehäuse (12) wenigstens ein Führungselement für eine der Komponenten der Anhaltevorrichtung (10) umfasst.

6. Anhaltevorrichtung nach einem der Ansprüche 1 bis 5,
**dadurch gekennzeichnet, dass** wenigstens ein Teil der, vorzugsweise alle, Komponenten der Anhaltevorrichtung (10) in deren fertig montiertem Zustand miteinander verrastet oder verpresst sind.

7. Anhaltevorrichtung nach einem der Ansprüche 1 bis 6,
**dadurch gekennzeichnet, dass** das Gehäuse (12) im fertig montierten Zustand einen Bauraum von höchstens 330 cm³ einnimmt.

8. Anhaltevorrichtung nach einem der Ansprüche 1 bis 7,
**dadurch gekennzeichnet, dass** sie ferner eine Sensoreinheit (26) zur Erfassung der Stellung des Stellelements (16a) der Stelleinheit (16) umfasst.

9. Anhaltevorrichtung nach Anspruch 8,
**dadurch gekennzeichnet, dass** die Stellelement-Sensoreinheit (26) ebenfalls in dem Gehäuse (12) integriert ist.

10. Anhaltevorrichtung nach einem der Ansprüche 1 bis 9,
**dadurch gekennzeichnet, dass** das Gehäuse (12) ferner eine Anschlussstelle (32) zum Anschließen einer zusätzlichen, außerhalb des Gehäuses (12) anordenbaren Sensoreinheit (36) zur Erfassung der Anwesenheit einer Transporteinheit (W) umfasst.

11. Anhaltevorrichtung nach einem der Ansprüche 1 bis 10,
**dadurch gekennzeichnet, dass** wenigstens eine Transporteinheit-Sensoreinheit (22, 24, 36) einen induktiven Sensor umfasst.

12. Anhaltevorrichtung nach einem der Ansprüche 1 bis 11,
**dadurch gekennzeichnet, dass** in dem Gehäuse (12) ferner eine Anzeigevorrichtung (30) integriert ist.

13. Anhaltevorrichtung nach einem der Ansprüche 1 bis 12,
**dadurch gekennzeichnet, dass** die Stelleinheit (16) magnetisch oder elektromotorisch betätigbar ist oder eine fluidisch, vorzugsweise pneumatisch, betätigbare Zylinder-Kolben-Einheit (16c/16d) ist.

14. Anhaltevorrichtung nach Anspruch 13,
**dadurch gekennzeichnet, dass** die Stelleinheit (16) ein Schaltelement (20) zum Ansteuern der Verstellung des Stellelements (16a), beispielsweise ein 3/2-Wegeventil, umfasst.

15. Anhaltevorrichtung nach einem der Ansprüche 1 bis 14,
**dadurch gekennzeichnet, dass** das Gehäuse (12) eine Anschlussstelle (16e/16f) zum Zuführen oder/und Abführen eines Mediums umfasst, welches die zum Verstellen des Stellelements (16a) erforderliche Energie bereitstellt.

16. Anhaltevorrichtung nach einem der Ansprüche 1 bis 15,
**dadurch gekennzeichnet, dass** das Stellelement (16a), beispielsweise mittels einer Feder (16g), in die vorgerückte Stellung vorgespannt ist.

17. Anhaltevorrichtung nach einem der Ansprüche 1 bis 16,
**dadurch gekennzeichnet, dass** die Steuereinheit (28) mit den beiden Transporteinheit-Sensoreinheiten (22, 24), mit der Stelleinheit (16), insbesondere deren Schaltelement (20), sowie gewünschtenfalls der zusätzlichen Transporteinheit-Sensoreinheit (36) oder/und der Stellelement-Sensoreinheit (26) oder/und der Anzeigevorrichtung (30) in Signalaustauschverbindung steht.

18. Anhaltevorrichtung nach Anspruch 17,
**dadurch gekennzeichnet, dass** das Gehäuse (12) eine Anschlussstelle (34) für eine externe Signalaustauschverbindung zu einer übergeordneten Steuervorrichtung (38) umfasst.

19. Anhaltevorrichtung nach einem der Ansprüche 1 bis 18,
**dadurch gekennzeichnet, dass** die Steuereinheit (28) zwei Steuermodule (28a, 28b) umfasst, von denen eine (28a) in Transportrichtung (T) vor und die andere (28b) in Transportrichtung (T) hinter der Stelleinheit (16) angeordnet ist.

20. Anhaltevorrichtung nach Anspruch 19,
**dadurch gekennzeichnet, dass** eines (28b) der Steuermodule bauraumgrößer ausgebildet ist als die jeweils andere Steuermodul (28a).

21. Anhaltevorrichtung nach Anspruch 19 oder 20,
**dadurch gekennzeichnet, dass** auf der Seite der Stelleinheit (16), auf der das bauraumgrößere Steuermodul (28b) angeordnet ist, die Stellelement-Sensoreinheit (26) angeordnet ist.

22. Anhaltevorrichtung nach einem der Ansprüche 19 bis 21,
**dadurch gekennzeichnet, dass** auf der Seite der Stelleinheit (16), auf der das bauraumkleinere Steuermodul (28a) angeordnet ist, das Schaltelement (20) der Stelleinheit (16) angeordnet ist.

23. Anhaltevorrichtung nach einem der Ansprüche 19 bis 22,
**dadurch gekennzeichnet, dass** wenigstens eines der beiden Steuermodulen (28a, 28b), vorzugsweise beide Steuermodule (28a, 28b), als Faltplatine ausgebildet ist.

24. Anhaltevorrichtung nach Anspruch 23,
**dadurch gekennzeichnet, dass** auf der Faltplatine wenigstens eine elektrisch leitfähige Abschirmfläche vorgesehen ist.

25. Anhaltevorrichtung nach Anspruch 24,
**dadurch gekennzeichnet, dass** die wenigstens eine Abschirmfläche im gefalteten Zustand der Faltplatine wenigstens eine elektrische Teilschaltung des Steuermoduls (28a, 28b) umschließt.

26. Anhaltevorrichtung nach einem der Ansprüche 23 bis 25,
**dadurch gekennzeichnet, dass** die Faltplatine in Gießharz eingegossen ist.

27. Anhaltevorrichtung nach Anspruch 26,
**dadurch gekennzeichnet, dass** auch die wenigstens einem der Steuermodule (28a, 28b) zugeordnete Transporteinheit-Sensoreinheit (22, 24) oder/und Stellelement-Sensoreinheit (26) mit diesem Steuermodul (28a, 28b) vergossen ist.

28. Anhaltevorrichtung nach einem der Ansprüche 19 bis 27,
**dadurch gekennzeichnet, dass** wenigstens eines der Steuermodule (28a, 28b) mit einem zugeordneten Haltebolzen (50), der zur Befestigung der Anhaltevorrichtung (10) an einer übergeordneten Baugruppe dient, oder einem diesem Haltebolzen (50) zugeordneten Teil (54) derart zusammenwirkt, dass es von einer an diesem Haltebolzen (50) oder an einem diesem zugeordneten Teil (54) ausgebildeten Schulter (54b) in Anlage gegen eine Wandung des Gehäuses (12) gedrängt wird.

29. Anhaltevorrichtung nach einem der Ansprüche 18 bis 28,
**dadurch gekennzeichnet, dass** zumindest die externe Signalaustauschverbindung eine Signalleitung (46) des Feldbus-Typs, vorzugsweise des ASI-Bus-Typs, umfasst.

30. Anhaltevorrichtung nach Anspruch 29,
**dadurch gekennzeichnet, dass** dann, wenn einem Steuermodul (28b) zwei Sensoreinheit (24, 26) zugeordnet sind, die für den Signalaustausch erforderliche, wenigstens eine Symmetrierspule (48) dieses Steuermoduls (28b) etwa in der Mitte zwischen den beiden Sensoreinheiten (24, 26) angeordnet ist.

31. Anhaltevorrichtung nach Anspruch 29 oder 30,
**dadurch gekennzeichnet, dass** wenigstens eine der mit dem Feldbus (46) verbundenen Komponenten der Anhaltevorrichtung (10), insbesondere wenigstens eines (28b) der Steuermodule, mit lokaler Intelligenz ausgestattet ist.

32. Anhaltevorrichtung nach den Ansprüchen 10, 15 und 18 und gewünschtenfalls einem der weiteren Ansprüche ,
**dadurch gekennzeichnet, dass** die Anschlussstelle (16e/16f) zum Zuführen oder/und Abführen des Mediums, welches die zum Verstellen des Stellelements (16a) erforderliche Energie bereitstellt, bezogen auf die Transportrichtung (T) auf der einen Seite der Stelleinheit (16) angeordnet ist, während die Anschlussstelle (32) zum Anschließen der zusätzlichen, außerhalb des Gehäuses (12) anordenbaren Sensoreinheit (36) und die Anschlussstelle (34) für die externe Signalaustauschverbindung zu der übergeordneten Steuervorrichtung (38) auf der jeweils anderen Seite der Stelleinheit (16) angeordnet sind.

## Claims

1. Device (10) for holding a transport unit (W) which moves along a transport path in a transport direction (T), 5comprising the components:
- an actuating unit (16) with a drive unit (16c/16d) and an actuating element (16a) which can be moved by the drive unit (16c/16d) between an advanced position and a retracted position,
wherein in its advanced position the actuating element (16a) can be brought indirectly or directly into holding engagement with the transport unit (W), but in its retracted position lets the transport unit (W) pass,
- a sensor unit (22) situated before the actuating unit (16), related to the transport direction (T), for detecting the presence of a transport unit (W) before the actuating unit (16),
- a sensor unit (24) situated after the actuating unit (16), related to the transport direction (T), for detecting the presence of a transport unit (W) after the actuating unit (16),
- a control unit (28) formed with intrinsic intelligence for receiving the detection results of the transport unit sensor units (22, 24) and for controlling the actuating unit (16),
wherein the two transport unit sensor units (22, 24) and the drive unit (16c/16d) of the actuating unit (16) are integrated into a common housing (12),
**characterised in that** the control unit (28) is also integrated into the housing (12).

2. Holding device according to Claim 1,
**characterised in that** the housing (12) is formed in two parts (12a, 12b).

3. Holding device according to Claim 2,
**characterised in that** a sealing element (44), preferably a flat seal, is provided between the two housing parts (12a, 12b) .

4. Holding device according to Claim 2 or 3,
**characterised in that** the two housing parts (12a, 12b), which are preferably made of plastics material, can be interlocked or snapped together.

5. Holding device according to any one of Claims 1 to 4,
**characterised in that** the housing (12) comprises at least one guide element for one of the components of the holding device (10) .

6. Holding device according to any one of Claims 1 to 5,
**characterised in that** at least some, preferably all of the components of the holding device (10) are interlocked or pressed together in their finally assembled state.

7. Holding device according to any one of Claims 1 to 6,
**characterised in that** the housing (12) takes up a volume of at most 330 cm³ in the finally assembled state.

8. Holding device according to any one of Claims 1 to 7,
**characterised in that** it also comprises a sensor unit (26) for detecting the position of the actuating element (16a) of the actuating unit (16).

9. Holding device according to Claim 8,
**characterised in that** the actuating element sensor unit (26) is also integrated into the housing (12).

10. Holding device according to any one of Claims 1 to 9,
**characterised in that** the housing (12) also comprises a connection point (32) for connecting an additional sensor unit (36), which can be situated outside of the housing (12), for detecting the presence of a transport unit (W).

11. Holding device according to any one of Claims 1 to 10,
**characterised in that** at least one transport unit sensor unit (22, 24, 36) comprises an inductive sensor.

12. Holding device according to any one of Claims 1 to 11,
**characterised in that** a display device (30) is also integrated into the housing (12).

13. Holding device according to any one of Claims 1 to 12,
**characterised in that** the actuating unit (16) can be actuated magnetically or electromotively or is a cylinder-piston unit (16c/16d) which can be actuated fluidically, preferably pneumatically.

14. Holding device according to Claim 13,
**characterised in that** the actuating unit (16) comprises a switching element (20), for example a 3/2-way valve, for triggering the movement of the actuating element (16a).

15. Holding device according to any one of Claims 1 to 14,
**characterised in that** the housing (12) comprises a connection point (16e/16f) for supplying or/and removing a medium which provides the energy required for moving the actuating element (16a) .

16. Holding device according to any one of Claims 1 to 15,
**characterised in that** the actuating element (16a) is biased into the advanced position, for example by means of a spring (16g) .

17. Holding device according to any one of Claims 1 to 16,
**characterised in that** the control unit (28) has a signal exchange connection with the two transport unit sensor units (22, 24), with the actuating unit (16), in particular the switching element (20) thereof, as well as optionally the additional transport unit sensor unit (36) or/and the actuating element sensor unit (26) or/and the display device (30).

18. Holding device according to Claim 17,
**characterised in that** the housing (12) comprises a connection point (34) for an external signal exchange connection to a higher-level control device (38).

19. Holding device according to any one of Claims 1 to 18,
**characterised in that** the control unit (28) comprises two control modules (28a, 28b), one (28a) of which is situated before the actuating unit (16) in the transport direction (T) and the other (28b) of which is situated after the actuating unit (16) in the transport direction (T).

20. Holding device according to Claim 19,
**characterised in that** one (28b) of the control modules is greater in volume than the respective other control module (28a) .

21. Holding device according to Claim 19 or 20,
**characterised in that** the actuating element sensor unit (26) is situated on the side of the actuating unit (16) on which the control module (28b) of a greater volume is situated.

22. Holding device according to any one of Claims 19 to 21,
**characterised in that** the switching element (20) of the actuating unit (16) is situated on the side of the actuating unit (16) on which the control module (28a) of a smaller volume is situated.

23. Holding device according to any one of Claims 19 to 22,
**characterised in that** at least one of the two control modules (28a, 28b), preferably both control modules (28a, 28b) is/are formed as a folding printed circuit board.

24. Holding device according to Claim 23,
**characterised in that** at least one electrically conductive shielding surface is provided on the folding printed circuit board.

25. Holding device according to Claim 24,
**characterised in that** the at least one shielding surface encompasses at least one electrical subcircuit of the control module (28a, 28b) when the folding printed circuit board is in the folded state.

26. Holding device according to any one of Claims 23 to 25,
**characterised in that** the folding printed circuit board is cast in casting resin.

27. Holding device according to Claim 26,
**characterised in that** the transport unit sensor unit (22, 24) or/and actuating element sensor unit (26) associated with at least one of the control modules (28a, 28b) is cast with this control module (28a, 28b).

28. Holding device according to any one of Claims 19 to 27,
**characterised in that** at least one of the control modules (28a, 28b) co-operates with an associated securing bolt (50), which serves to fasten the holding device (10) to a higher-level assembly, or a part (54) associated with this securing bolt (50) such that it is pressed into contact with a wall of the housing (12) by a shoulder (54b) formed on this securing bolt (50) or on a part (54) associated with the latter.

29. Holding device according to any one of Claims 18 to 28,
**characterised in that** at least the external signal exchange connection comprises a signal line (46) of the field bus type, preferably of the ASI bus type.

30. Holding device according to Claim 29,
**characterised in that**, if two sensor units (24, 26) are associated with a control module (28b), the at least one balancing coil (48), which is required for the signal exchange, of this control module (28b) is situated approximately in the middle between the two sensor units (24, 26).

31. Holding device according to Claim 29 or 30,
**characterised in that** at least one of the components of the holding device (10) which are connected to the field bus (46), in particular at least one (28b) of the control modules, is equipped with local intelligence.

32. Holding device according to Claims 10, 15 and 19 and optionally one of the other Claims,
**characterised in that** the connection point (16e/16f) for supplying or/and removing the medium which provides the energy required for moving the actuating element (16a) is situated on one side of the actuating unit (16), related to the transport direction (T), whereas the connection point (32) for connecting the additional sensor unit (36) which is situated outside of the housing. (12) and the connection point (34) for the external signal exchange connection to the higher-level control device (38) are situated on the respective other side of the actuating unit (16).

## Revendications

1. Dispositif (10) destiné à arrêter une unité de transport (W) se déplaçant dans une direction de transport (T) le long d'une voie de transport, comportant les composants :
- une unité de réglage (16) avec une unité d'entraînement (16c/16d) et un élément de réglage (16a) apte à être déplacé par l'unité d'entraînement (16c/16d) entre une position avancée et une position reculée,
l'élément de réglage (16a) dans sa position avancée pouvant être amené en prise directement ou indirectement avec l'unité de transport (W) pour l'arrêter, par contre, laissant passer l'unité de transport (W) dans sa position reculée,
- une unité de détection (22), agencée par référence à la direction de transport (T) devant l'unité de réglage (16) et destinée à détecter la présence d'une unité de transport (W) devant l'unité de réglage (16),
- une unité de détection (24), agencée par référence à la direction de transport (T) derrière l'unité de réglage (16) et destinée à détecter la présence d'une unité de transport (W) derrière l'unité de réglage (16),
- une unité de commande (28) conçue avec une intelligence propre, destinée à recevoir les résultats de détection des unités de détection d'unité de transport (22, 24) et destinée à commander l'unité de réglage (16), les deux unités de détection d'unité de transport (22, 24) et l'unité d'entraînement (16c/16d) de l'unité de réglage (16) étant intégrées dans un carter (12) commun,
**caractérisé en ce que** l'unité de commande (28) est également intégrée dans le carter (12).

2. Dispositif d'arrêt selon la revendication 1, **caractérisé en ce que** le carter (12) est réalisé en deux parties (12a, 12b).

3. Dispositif d'arrêt selon la revendication 2, **caractérisé en ce qu'**il est prévu un élément d'étanchéité (44), de préférence une garniture d'étanchéité plate, entre les deux parties de carter (12a, 12b).

4. Dispositif d'arrêt selon la revendication 2 ou 3, **caractérisé en ce que** les deux parties de carter (12a, 12b), réalisées de préférence en matière plastique, peuvent être encliquetées ou enclenchées l'une dans l'autre.

5. Dispositif d'arrêt selon l'une quelconque des revendications 1 à 4, **caractérisé en ce que** le carter (12) comporte au moins un élément de guidage pour l'un des composants du dispositif d'arrêt (10).

6. Dispositif d'arrêt selon l'une quelconque des revendications 1 à 5, **caractérisé en ce qu'**au moins une partie des composants, de préférence tous les composants du dispositif d'arrêt (10) sont encliquetés ou pressés les uns avec les autres dans la position montée dudit dispositif d'arrêt.

7. Dispositif d'arrêt selon l'une quelconque des revendications 1 à 6, **caractérisé en ce que** le carter (12), dans la position montée, occupe un volume d'encombrement de 330 cm³ maximum.

8. Dispositif d'arrêt selon l'une quelconque des revendications 1 à 7, **caractérisé en ce qu'**il comporte en outre une unité de détection (26) destinée à détecter la position de l'élément de réglage (16a) de l'unité de réglage (16).

9. Dispositif d'arrêt selon la revendication 8, **caractérisé en ce que** l'unité de détection d'élément de réglage (26) est également intégrée dans le carter (12).

10. Dispositif d'arrêt selon l'une quelconque des revendications 1 à 9, **caractérisé en ce que** le carter (12) comporte en outre un point de raccordement (32) pour le raccordement d'une unité de détection (36) supplémentaire, destinée à être montée en dehors du carter (12) pour détecter la présence d'une unité de transport (W).

11. Dispositif d'arrêt selon l'une quelconque des revendications 1 à 10, **caractérisé en ce qu'**au moins une unité de détection d'unité de transport (22, 24, 36) comporte un capteur inductif.

12. Dispositif d'arrêt selon l'une quelconque des revendications 1 à 11, **caractérisé en ce qu'**un dispositif d'affichage (30) est également intégré dans le carter (12).

13. Dispositif d'arrêt selon l'une quelconque des revendications 1 à 12, **caractérisé en ce que** l'unité de réglage (16) peut être actionnée par voie magnétique ou par un moteur électrique ou est une unité à cylindre et piston (16c/16d) actionnée par un fluide, de préférence par voie pneumatique.

14. Dispositif d'arrêt selon la revendication 13, **caractérisé en ce que** l'unité de réglage (16) comporte un élément de commutation (20), tel qu'une vanne à 3/2 voies, destiné à activer le déplacement de l'élément de réglage (16a).

15. Dispositif d'arrêt selon l'une quelconque des revendications 1 à 14, **caractérisé en ce que** le carter (12) comporte un point de raccordement (16e/16f) pour amener et/ou évacuer un milieu, qui fournit l'énergie nécessaire pour le réglage de l'élément de réglage (16a).

16. Dispositif d'arrêt selon l'une quelconque des revendications 1 à 15, **caractérisé en ce que** l'élément de réglage (16a) est précontraint, par exemple au moyen d'un ressort (16g), dans la position avancée.

17. Dispositif d'arrêt selon l'une quelconque des revendications 1 à 16, **caractérisé en ce que** l'unité de commande (28) est reliée pour des échanges de signaux avec les deux unités de détection d'unité de transport (22, 24), avec l'unité de réglage (16), en particulier avec l'élément de commutation (20) de celle-ci, ainsi que, si nécessaire, avec l'unité de détection d'unité de transport (38) supplémentaire et/ou avec l'unité de détection d'élément de réglage (26) et/ou avec le dispositif d'affichage (30).

18. Dispositif d'arrêt selon la revendication 17, **caractérisé en ce que** le carter (12) comporte un point de raccordement (34) pour une liaison d'échange de signaux externe vers un dispositif de commande (38) supérieur.

19. Dispositif d'arrêt selon l'une quelconque des revendications 1 à 18, **caractérisé en ce que** l'unité de commande (28) comporte deux modules de commande (28a, 28b), dont l'un (28a) est monté en amont de l'unité de réglage (16) par référence à la direction de transport (T) et l'autre (28b) est monté en aval de l'unité de réglage (16) par référence à la direction de transport (T).

20. Dispositif d'arrêt selon la revendication 19, **caractérisé en ce que** l'un (28b) des modules de commande occupe un volume d'encombrement plus grand que l'autre module de commande (28a).

21. Dispositif d'arrêt selon la revendication 19 ou 20, **caractérisé en ce que** l'unité de détection d'élément de réglage (26) est agencée sur le côté de l'unité de réglage (16) sur lequel est monté le module de commande (28b) occupant un volume d'encombrement plus grand.

22. Dispositif d'arrêt selon l'une quelconque des revendications 19 à 21, **caractérisé en ce que** l'élément de commutation (20) de l'unité de réglage (16) est monté sur le côté de l'unité de réglage (16) sur lequel est monté le module de commande (28a) occupant un volume d'encombrement plus petit.

23. Dispositif d'arrêt selon l'une quelconque des revendications 19 à 22, **caractérisé en ce qu'**au moins un des deux modules de commande (28a, 28b), de préférence les deux modules de commande (28a, 28b) sont réalisés sous forme de platine pliable.

24. Dispositif d'arrêt selon la revendication 23, **caractérisé en ce qu'**il est prévu au moins une surface de protection électroconductrice sur la platine pliable.

25. Dispositif d'arrêt selon la revendication 24, **caractérisé en ce que**, dans la position pliée de la platine pliable, ladite au moins une surface de protection entoure au moins un circuit électrique partiel du module de commande (28a, 28b).

26. Dispositif d'arrêt selon l'une quelconque des revendications 23 à 25, **caractérisé en ce que** la platine pliable est coulée dans une résine de moulage.

27. Dispositif d'arrêt selon la revendication 26, **caractérisé en ce qu'**également ladite au moins une unité de détection d'unité de transport (22, 24), associée aux modules de commande (28a, 28b), et/ou l'unité de détection d'élément de réglage (26) sont scellées avec ce module de commande (28a, 28b).

28. Dispositif d'arrêt selon l'une quelconque des revendications 19 à 27, **caractérisé en ce qu'**au moins l'un des modules de commande (28a, 28b) coopère avec un boulon de fixation (50) associé, utilisé pour fixer le dispositif d'arrêt (10) contre un groupe modulaire prioritaire, ou avec une partie (54) associée à ce boulon de fixation (50), de telle sorte qu'il est poussé en appui contre une paroi du carter (12) par un épaulement (54b) réalisé sur ce boulon de fixation (50) ou sur une partie (54) associée à celui-ci.

29. Dispositif d'arrêt selon l'une quelconque des revendications 18 à 28, **caractérisé en ce qu'**au moins la liaison externe d'échange de signaux comporte une ligne de transmission de signaux (46) du type bus de terrain, de préférence du type bus ASI.

30. Dispositif d'arrêt Selon la revendication 29, **caractérisé en ce que**, lorsque deux unités de détection (24, 26) sont associées à un module de commande (28b), ladite au moins une bobine de compensation (48) de ce module de commande (28b), laquelle est nécessaire pour l'échange de signaux, est montée à peu près au milieu entre les deux unités de détection (24, 26).

31. Dispositif d'arrêt selon la revendication 29 ou 30, **caractérisé en ce qu'**au moins un des composants du dispositif d'arrêt (10), reliés au bus de terrain (46), en particulier au moins un (28b) des modules de commande, est équipé d'une intelligence locale.

32. Dispositif d'arrêt selon les revendications 10, 15 et 18 et, si nécessaire, une des autres revendications, **caractérisé en ce que** le point de raccordement (16e/16f) pour amener et évacuer le milieu qui fournit l'énergie nécessaire au déplacement de l'élément de réglage (16a), est agencé par rapport à la direction de transport (T) sur l'un des côtés de l'unité de réglage (16), tandis que le point de raccordement (32) pour le raccordement de l'unité de détection (36) supplémentaire, destinée à être montée en dehors du carter (12), et le point de raccordement (34) pour la liaison externe d'échange de signaux vers le dispositif de commande (38) supérieur sont agencés sur l'autre côté de l'unité de réglage (16).
